Europäisches Patentamt

(19) European Patent Office

Office européen des brevets

(11) Numéro de publication: **0 191 112**
**B1**

(12) **FASCICULE DE BREVET EUROPEEN**

(45) Date de publication du fascicule du brevet: **19.12.90**

(51) Int. Cl.⁵: **G 01 K 1/14, F 16 B 21/04**

(21) Numéro de dépôt: **84440042.4**

(22) Date de dépôt: **28.09.84**

(54) Sonde de mesure de température pour appareils émaillés.

(30) Priorité: **23.11.83 FR 8318779**

(43) Date de publication de la demande:
**20.08.86 Bulletin 86/34**

(45) Mention de la délivrance du brevet:
**19.12.90 Bulletin 90/51**

(84) Etats contractants désignés:
**BE DE GB LU NL**

(56) Documents cités:
**DE-A-2 142 729**
**FR-A-1 503 961**
**FR-A-1 541 114**
**FR-A-2 128 791**

**Le dossier contient des informations techniques
présentées postérieurement au dépôt de la
demande et ne figurant pas dans le présent
fascicule.**

(73) Titulaire: **DE DIETRICH & Cie, Société Anonyme
dite**
**F-67110 Niederbronn-Les-Bains (FR)**

(72) Inventeur: **Hamert, Jean-Marie**
**16 rue du Spesbourg**
**F-67800 Hoenheim (FR)**

(74) Mandataire: **Metz, Paul**
**Cabinet METZ PATNI 63, rue de la Ganzau B.P.
63**
**F-67024 Strasbourg Cédex (FR)**

Courier Press, Leamington Spa, England.

## Description

La présente invention concerne les sondes thermiques, et vise plus spécialement les sondes destinées aux appareils émaillés, tels que des réacteurs utilisés dans l'industrie chimique, et qui doivent être démontables de l'extérieur.

On sait que du point de vue fonctionnement de telles sondes doivent présenter, à la fois, un court temps de réponse et la meilleure précision possible dans un intervalle très large de température, de l'ordre de −60° à +250°C; par ailleurs, du point de vue constitution, elles doivent avoir une surface lisse, sans joints et d'une résistance chimique au moins équivalente à l'émail recouvrant l'appareil qu'elles équipent.

Aucun des dispositifs actuellement connus ne réunit l'ensemble de ces avantages.

En effet, on peut citer, pour situer l'état de la technique:

un premier système utilisé sur la sonde De Dietrich à calotte soudée consistant en un thermocouple soudé dans un embout émaillé: bien que son temps de réponse soit court, sa précision est faible. Au surplus il n'est pas interchangeable,

un deuxième système utilisé sur les sondes de références constructeur Pfaudler T ou TW consistant en un thermocouple ou une thermosonde à résistance noyé dans la couche d'émail: dans ce cas le temps de réponse est très court, mais sa réalisation est difficile, et il n'est pas interchangeable, sinon avec l'élément émaillé tout entier,

un troisième système objet de la demande FR 2392373 consistant à insérer la sonde dans un cône collé par émaillage dans un logement prévu dans la paroi de l'appareil, il n'est pas démontable.

On a également proposé des systèmes, par exemple dans le brevet FR 2 447 018, qui sont montés depuis l'intérieur de l'appareil, avec une interposition d'un joint de Teflon®. Une telle constitution telle qu'elle vient d'être définie représente en elle-même un inconvénient, puisque ne permettant pas le démontage depuis l'extérieur de l'appareil, alors que pourtant ils ne sont pas pas entièrement émaillés.

Par ailleurs, dans le domaine des détecteurs de température en général, on peut citer le document FR—A—2128791 qui décrit un détecteur à position réglable, sollicité par ressort.

Ledit détecteur comporte un capuchon à baïonnette dont la position relative par rapport au cable spiralé permet d'appliquer élastiquement l'extrémité d'une broche de détection contre le fond d'un alésage prévu dans le corps solide dont on veut mesurer la température.

Par conséquent, ce type de dispositif ne peut être appliqué à la mesure de température de corps liquides ou pâteux contenus dans les réacteurs chimiques, de plus il ne répond pas aux impératifs de construction énumérés on début de description, à savoir: surface lisse, absence de joints, bonne résistance chimique.

La présente invention telle que décrite dans la revendication 1 permet de surmonter la totalité de ces inconvénients, grâce à un dispositif qui, à la fois:

est monté à l'intérieur d'un élément entièrement émaillé, tout en étant cependant facilement interchangeable depuis l'extérieur de l'appareil;

présente un temps de réponse aussi court que celui du thermocouple soudé précité;

possède la meilleure précision possible, car pouvant être équipé d'une ou plusieurs thermosondes, thermocouples ou thermistances.

A cet effet, le système selon l'invention se compose d'une part d'un ensemble capteur immobilisable contre le fond mince émaillé du brise-lames, d'autre part d'une pièce intermédiaire servant à cette immobilisation et enfin d'un dispositif de mise en place et extraction depuis l'extérieur de cette pièce intermédiaire et de l'ensemble capteur.

La pièce intermédiaire est un manchon qui se caractérisé par deux paires de doigts radiaux lui permettant d'être à volonté immobilisée par un système de douille à baïonnette en maintenant l'ensemble capteur contre le fond plat, ou dégagée et extraite en libérant l'ensemble capteur. Dans ce but, le dispositif de mise en place et extraction comporte une douille à double baïonnette symétrique.

On va maintenant décrire l'invention en se référant au dessin annexé sur lequel:

la figure 1 est une coupe axiale du système selon l'invention,

la figure 2 est une vue éclatée du même système et les figures 3a à 3f d'une part et 4a à 4e d'autre part illustrent la mise en place et l'extraction de l'ensemble capteur.

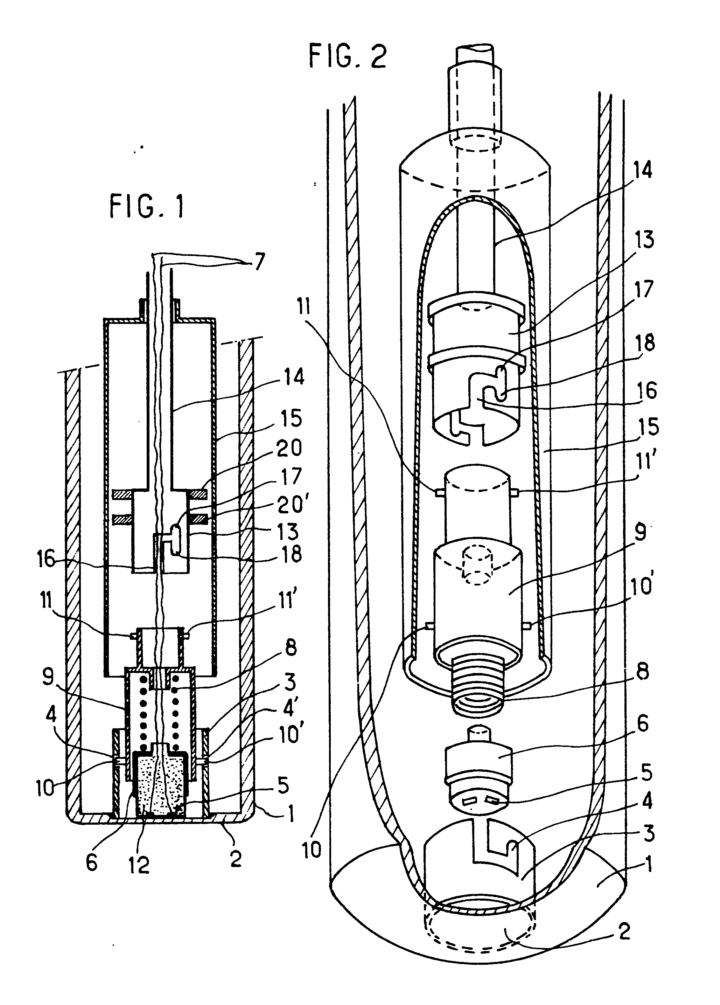

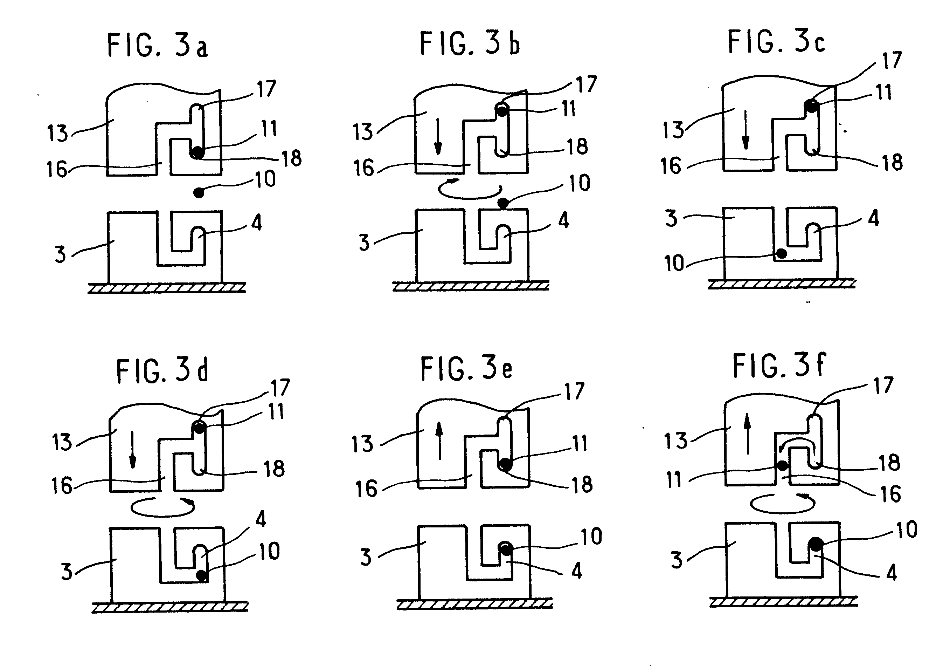

Si l'on se réfère d'abord aux figures 1 et 2, on y a représenté un cylindre plongeur 1, qui peut être le brise-lame ou une gaine thermométrique. Ce cylindre est en acier émaillé et son fond 2 est plat, aminci à environ 1,5 mm et également émaillé. Contre ce fond 2 est soudée une douille 3 en acier inoxydable, et comportant une baïonnette 4—4'. Contre le fond de cette douille vient s'appliquer le capteur 5, porté par une tête de mesure 6, et d'où partent les fils 7.

En position montée, représentée à la figure 1, la tête de mesure 6 est maintenue contre le fond par un ressort 8 prenant appui par ailleurs sur le fond d'une pièce intermédiaire, constituée par un manchon 9 coulissant entre la tête 6 et la douille 3 et comportant deux paires de doigts transversaux 10—10' et 11—11' situés respectivement dans sa partie inférieure et dans sa partie supérieure. Les doigts 10—10' coopérent avec la baïonnette 4—4' pour maintenir le manchon 9 accroché à la douille 3, donc pour appliquer la sonde 5 contre le fond 2 qui est traité anti-corrosion.

Selon une autre caractéristique de l'invention, chaque capteur 5 est monté dans une masse 12 d'un matériau isolant à faible inertie thermique et résistant à la compression, tel que par exemple du verre expansé. Le temps de réponse est ainsi aussi court que celui des meilleurs systèmes actuels, montés par l'intérieur.

Cependant, par rapport à ces systèmes, celui selon l'invention présente l'avantage remarquable de pouvoir être monté depuis l'extérieur, grâce à une seconde douille à baïonnette 13, montée mobile à l'extrémité d'une tige de longueur suffisante 14, le tout étant guidé axialement par un tube 15. Une particularité de la baïonnette 16 de la douille 13 est d'être double, présentant une encoche vers le haut 17, et une encoche vers le bas 18.

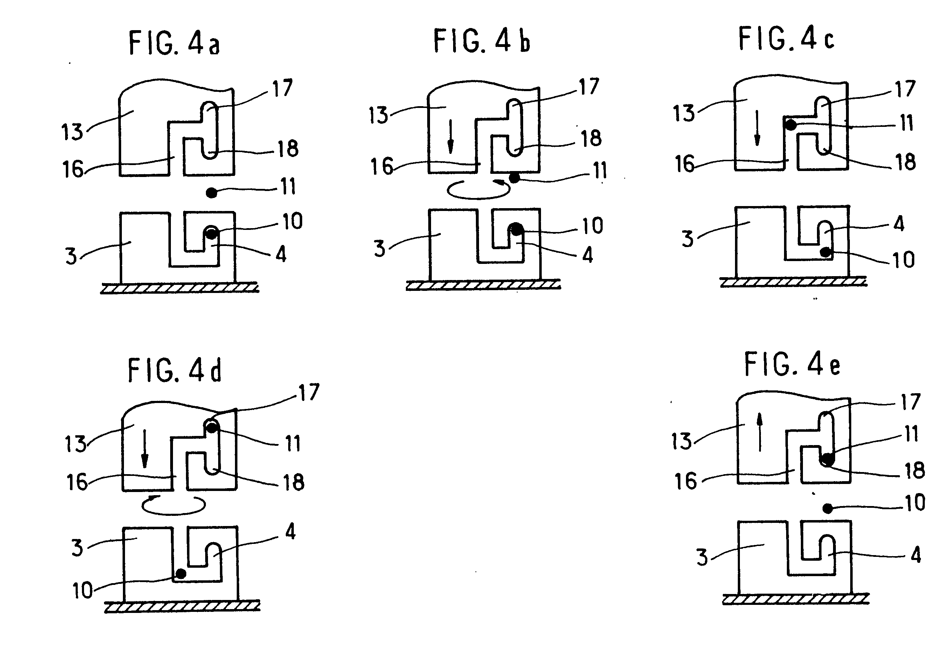

Cela permet de procéder à la pose et à l'extraction de la thermosonde par les suites d'opérations illustrées sur les figures 3 et 4:

Sur ces figures, pour la commodité du dessin, on a représenté les pièces 3 et 13 toujours à la même distance, avec les tétons 10 et 11 à écart variable, alors qu'en réalité, c'est l'inverse qui se présente; en fait les relations entre les divers éléments considérés demeurent les mêmes.

Le processus est le suivant: on passe les fils 7 à l'intérieur du tube 14, en les gardant légèrement tendus, et on descend l'ensemble dans le cylindre 1, jusqu'à ce que le tube de guidage 15 coiffe la douille fixe 3. C'est cette phase de descente qu'illustre la figure 3a. Puis, le contact étant atteint, on appuie en opposition au ressort 8, et on cherche les fentes 4—4', en tournant vers la droite (sens des aiguilles d'une montre) (figure 3b), et on engage les tétons 10—10' dans les fentes 4—4' (figure 3c). Alors, sans relâcher la pression, on tourne en sens contraire, pour verrouiller cet engagement (figure 3d), on vérifie l'accrochage en tirant vers le haut (figure 3e), et on libère la douille 13 des tétons 11—11' en tournant vers la gauche (figure 3f). La douille 13 est alors immobilisée, en assurant le contact de la tête de mesure 6 contre le fond 2.

Pour l'extraction de la douille 13, et de la tête 6, on procède à l'envers: on descend la douille 13 jusqu'au contact des tétons 11—11' (figure 4a), on cherche les fentes 16 en tournant vers la gauche (figure 4b), on appuie (figure 4c), on tourne vers la droite, de qui, à la fois accroche le manchon 9 à la douille 13 et la dégage de la douille 3 (figure 4d) et on extrait le manchon 9, ce qui libère en même temps la tête de mesure 6.

Bien entendu, la tête de mesure pourra être équipée en option de thermosondes, thermistances, thermocouples, thermomètres à bulle ou analogues, en nombre quelconque par sécurité, bien que leur interchangeabilité soit ainsi très aisée.

## Revendications

1. Sonde thermique destinée notamment à un réacteur chimique, comportant d'une part un ensemble capteur immobilisable contre le fond mince (2) émaillé d'un cylindre plongeur, d'autre part d'une pièce intermédiaire (9) destinée à assurer cette immobilisation, caractérisée en ce que la pièce intermédiaire consiste en un manchon (9) portant deux paires de tétons (10, 10', 11, 11'), respectivement vers sa partie supérieure et vers sa partie inférieure, pouvant coopérer respectivement avec une douille (13) à baïonnette mobile (16) destinée à sa pose et à son extraction, et avec une douille à baïonnette (4, 4') fixée au fond (2) et destinée à son immobilisation contre la tête de mesure (6) sous l'action d'un ressort (8) permettant ainsi la mise en place et l'extraction depuis l'extérieur du réacteur de cette pièce intermédiaire et de cet ensemble capteur.

2. Sonde thermique selon la revendication 1, caractérisée en ce que l'ensemble capteur se compose d'une tête de mesure (6) dans laquelle chaque sonde est logée dans une masse de matériau isolant notamment de verre expansé.

3. Sonde thermique selon l'une quelconque des revendications 1 et 2, caractérisée en ce que la douille (13) à baïonnette de pose et d'extraction comporte une baïonnette double orientée à la fois vers le haut (17) et vers le bas (16).

## Patentansprüche

1. Temperaturmeßsonde, insebesondere für ein Reaktionsgefäß, mit einerseits einer Meßfühlereinrichtung, die gegen den dünnen, emaillierten Boden (2) eines Eintauchzylinders immobilisierbar ist, und andererseits mit einem diese Immobilisierung gewährleistenden Zwischenstück (9), dadurch gekennzeichnet, daß das Zwischenstück aus einer Muffe (9) besteht, die zwei Paare von Ansätzen (10, 10', 11, 11') aufweist, die jeweils an ihrem oberen Bereich und an ihrem unteren Bereich angeordnet sind und die jeweils mit einer mit einem beweglichen Bajonett (16) versehenen Hülse (13), die zu seiner Einbringung und zu seiner Entfernung vorgesehen ist, und mit einer Bajonetthülse (4, 4') zusammenwirken können, die am Boden (2) befestigt und für seine Immobilisierung gegen den Meßkopf (6) unter der Wirkung einer Feder (8) vorgesehen ist, um so die Einbringung und die Entfernung dieses Zwischenstückes und dieser Meßfühlereinrichtung von außerhalb des Reaktionsgefäßes her zu gewährleisten.

2. Temperaturmeßsonde nach Anspruch 1, dadurch gekennzeichnet, daß die Meßfühlereinrichtung einen Meßkopf (6) umfaßt, in den jede Sonde in einer Isoliermasse, insbesondere aus Schaumglas, angeordnet ist.

3. Temperaturmeßsonde nach Anspruch 1 oder Anspruch 2, dadurch gekennzeichnet, daß die Bajonetthülse (13) zum Einbringen und zum Entfernen ein Doppelbajonett umfaßt, das gleichzeitig nach oben (17) und nach unten (16) ausgerichtet ist.

## Claims

1. Thermal probe, in particular for a chemical reactor, comprising on the one hand a sensor assembly which can be locked against the enamelled, thin base (2) of an immersion cylinder, and on the other hand an intermediate piece (9) for ensuring this locking, characterised in that the intermediate piece consists of a sleeve tube (9) carrying two pairs of studs (10, 10', 11, 11'), towards its upper part and towards its lower part respectively, which sleeve tube (9) is capable of co-operating respectively with a socket (13) having a movable bayonet (16) for its installation and its removal, and with a bayonet socket (4, 4') which is fixed to the base (2) and is provided for locking it against the measuring head (6) under the action of a spring (8), thus making installation and removal of the said intermediate piece and the said sensor assembly possible from outside the reactor.

2. Thermal probe according to claim 1, characterised in that the sensor assembly comprises a measuring head (6) in which each probe is housed within a mass of insulating material, in particular of expanded glass.

3. Thermal probe according to either one of claims 1 or 2, characterised in that the bayonet socket (13) for installation and removal comprises a double bayonet which is directed both upwards (17) and downwards (16).

FIG. 2

FIG. 1

FIG. 3a  FIG. 3b  FIG. 3c

FIG. 3d  FIG. 3e  FIG. 3f

FIG. 4 a

FIG. 4 b

FIG. 4 c

FIG. 4 d

FIG. 4 e